# EUROPEAN PATENT SPECIFICATION

(11) **EP 3 501 855 B1**
(45) Date of publication and mention of the grant of the patent: **27.04.2022**
(21) Application number: 18213360.3
(22) Date of filing: 18.12.2018
(51) Int. Cl.: B60C 11/24

(54) **SENSOR SYSTEM FOR MONITORING TIRE WEAR**
SENSORSYSTEM ZUR ÜBERWACHUNG DES REIFENVERSCHLEISSES
SYSTÈME DE CAPTEUR POUR LA SURVEILLANCE DE L'USURE DE PNEUMATIQUES

(30) Priority: 20.12.2017 US 201762608358 P
(43) Date of publication of application: 26.06.2019
(73) Proprietor: The Goodyear Tire & Rubber Company, Akron, OH 44316 (US)
(72) Inventor: PULFORD, Carl Trevor Ross, Akron, OH 44333 (US); LIN, Cheng-Hsiung, Hudson, Ohio 44236 (US)
(74) Representative: Kutsch, Bernd

(56) References cited:
- EP-A1- 2 995 474
- EP-A2- 0 937 615
- WO-A1-03/031208
- JP-A- 2005 186 749
- US-A1- 2006 124 214

## Description

### Field of the Invention

The invention relates generally to a sensing system for real-time monitoring of tire wear over its life time and, more specifically, to a sensing system based on tire-embedded tread wear sensor implementation.

### Background of the Invention

The use of tread wear indicators is not new and the use of tread wear indicators is mandated by law in many countries. A variety of such indicators are known. Some employ colored indicia below the tread for a visual indicator of wear. Other types use tie-bar type elements in the tread grooves.

The practical problem with the colored indicators of the type mentioned is that, being visual, the vehicle operator has to manually inspect each tire on the vehicle while it is stationary in order to find the colored indicators on the tire circumference, which is slow and inconvenient. Also, it is also difficult to do in muddy, dirty or snowy conditions. Similar problems occur when the tire employs the tie-bar type wear indicator and it can be difficult to determine the extent of wear until the tire is completely worn. It is quicker and easier for the operator to use the visual Lincolns head penny coin method.

US-B-6,523,586 discloses wear indicators for a tire tread wherein, in a series, or predetermined closely located grouping, of related marks, the marks disappear as the tire is worn. While this provides continuous information to the consumer, the complexity of forming the tire is increased due to the need to form multiple different marks that appear only after a defined amount of wear. While providing information about the extent of wear to the vehicle operator, this visual type of wear indicator suffers from the same practical operational problems mentioned above. Furthermore, the measurement is not numerical or digital so in order to derive full information from it, such as the rate of wear, the results must be transcribed into a computer or smart phone. This is slow and inconvenient for the operator.

A cheap and effective tread wear indicator which is readily integrated into a tire and which reliably measures tread wear in a manner easily monitored by a vehicle operator is, accordingly, desired and heretofore unattained.

WO-A-03/031208 describes a method and a device for the continuous measurement of wear in relation to a tyre casing. The method measures the electrical resistance or capacitance inside a tread design element and deduces the height of the element using a relationship that links capacity or resistance to the height.

US-A-2006/0124214 describes a method and a product for wear level determination in a tire. Data is received from at least one RFID tag within a thickness of a wearing surface layer of the tire. With the use of the tire, the thickness of the wearing surface is reduced.

EP-A- 0 937 615 describes a system and method for measuring physical data of a tire using a sensor and an antenna integrated in the tire.

EP-A- 2 995 474 describes a further tire wear system using an RFID tag and an antenna integrated in the tread of the tire. The sensor comprises a piezoelectric disk.

JP-A- 2005-186749 describes a wheel condition amount sensor detecting a wheel condition such as air pressure and temperature.

### Summary of the Invention

The invention relates to a system in accordance with claim 1.

Dependent claims refer to preferred embodiments of the invention.

In a preferred aspect of the invention, the tread wear sensor is positioned in a groove or in a sipe of the tread.

In one aspect of the invention, the tread wear sensor comprises a printed circuit or wherein the capacitor is part of a printed circuit.

In yet another preferred aspect of the invention, the tread wear sensor or the printed circuit is in electrical or wireless communication with a RFID tag.

In yet another preferred aspect of the invention, the tread wear sensor comprises a preferably relatively thin layer having a first and second surface, the layer being part of the capacitor such as its dielectric.

In yet another preferred aspect of the invention, a respective element of the capacitor such as a printed layer of said electrically conductive ink is formed on at least one or on each of the first and second surface.

In yet another preferred aspect of the invention, the layer is a rubber layer.

In yet another preferred aspect of the invention, the capacitor is oriented in the radial direction or extends along the radial direction of the tread.

In yet another preferred aspect of the invention, the sensor is mounted to the side of a tread element.

In yet another preferred aspect of the invention, the printed circuit is printed using a stretchable ink.

In yet another preferred aspect of the invention, the capacitor is printed using a stretchable electrically conductive ink.

In yet another preferred aspect of the invention, the RFID tag is printed on the rubber layer and is in electrical communication with the printed circuit.

In yet another preferred aspect of the invention, the RFID tag is a chip mounted on the layer.

In yet another preferred aspect of the invention, the RFID tag is a chip mounted in the tread in a groove or a sipe.

In yet another preferred aspect of the invention, the RFID tag is a chip mounted in the tread in a pocket of a groove or a sipe.

In yet another preferred aspect of the invention, the tread wear sensor is mounted in the tread in a groove or sipe post cure of the tire.

In yet another preferred aspect of the invention, the system further comprises a reader, preferably a UHF-RFID reader or a passive UHF-RFID reader.

In yet another preferred aspect of the invention, the system further comprises data processing means for determining a tread wear status of the tread based on the absence of an electrical signal from the electrical element or the capacitor.

In yet another preferred aspect of the invention, the RFID tag is passive.

In yet another preferred aspect of the invention, the RFID tag comprises a A/D convertor.

In yet another preferred aspect of the invention, the electrical element or the capacitor is sacrificial.

In yet another preferred aspect of the invention, there is an array of tread wear sensor sensors mounted in the tread.

In yet another preferred aspect of the invention, a passive voltage-measuring circuit is mounted in the tread in a groove or in a sipe.

In yet another preferred aspect of the invention, the RFID tag is mounted in or inside the tire.

In yet another preferred aspect of the invention, the tire is mounted upon a wheel and the reader is mounted on the wheel.

In yet another preferred aspect of the invention, the system comprises data processing means for determining a tread wear status of the tread based on the electrical signals from a plurality of the tread wear sensors.

### Definitions

"Groove" means an elongated void area in a tread that may extend circumferentially or laterally about the tread in a straight curved, or zigzag manner. Circumferentially and laterally extending grooves sometimes have common portions and may be sub classified as "wide", "narrow", or "sipe". The slot typically is formed by steel blades inserted into a cast or machined mold or tread ring therefor. In the appended drawings, slots are illustrated by single lines because they are so narrow.

A "sipe" is a groove having a width in the range from 0.2 percent to 0.8 percent of the compensated tread width, whereas a "narrow groove" has a width in the range from 0.8 percent to 3 percent of the compensated tread width and a "wide groove" has a width greater than 3 percent thereof. The "groove width" is equal to tread surface area occupied by a groove or groove portion, the width of which is in question, divided by the length of such groove or groove portion; thus, the groove width is its average width over its length. Grooves, as well as other voids, reduce the stiffness of tread regions in which they are located. Sipes often are used for this purpose, as are laterally extending narrow or wide grooves. Grooves may be of varying depths in a tire. The depth of a groove may vary around the circumference of the tread, or the depth of one groove may be constant but vary from the depth of another groove in the tire. If such narrow or wide groove are of substantially reduced depth as compared to wide circumferential grooves which they interconnect, they are regarded as forming "tie bars" tending to maintain a rib-like character in the tread region involved.

"Inner" means toward the inside of the tire and "outer" means toward its exterior.

"Outer" means toward the tire's exterior.

"Radial" and "radially" are used to mean directions radially toward or away from the axis of rotation of the tire.

"Tread" means a molded rubber component which, when bonded to a tire casing, includes that portion of the tire that comes into contact with the road when the tire is normally inflated and under normal load. The tread has a depth conventionally measured from the tread surface to the bottom of the deepest groove of the tire.

"Tread Element" is a protruding portion of a tread such as a lug or rib which constitutes the element that comes into contact with the road.

### Brief Description of the Drawings

The invention will be described by way of example and with reference to the accompanying drawings in which:
Fig. 1 is a perspective view of a tire and tread wear sensor assembly;
Fig. 2 is a close-up front view of a tire and tread wear sensor assembly;
Fig. 3A-3D are example capacitor electrical elements suitable for use in the invention;
Fig. 4 is a first embodiment of a tread wear sensor;
Fig. 5 is a second embodiment of a tread wear sensor;
Fig. 6 is a schematic diagram of a vehicle having a tire and passive tread wear sensors assembly mounted on each axle that could be powered and communicated wirelessly with a vehicle hub mounted miniature RFID reader with direct power source from the vehicle;
Fig. 7 is a schematic diagram of a vehicle having a tire and passive tread wear sensors assembly mounted on each axle that could be powered and communicated wirelessly with a vehicle hub mounted miniature RFID reader with power source from a wireless charging transmitter that is powered by vehicle;
Fig. 8 is a schematic diagram of a vehicle having a tire and passive tread wear sensors assembly mounted on each axle that could be powered and communicated wirelessly with a single RFID reader with power source from the vehicle; and
Fig. 9 illustrates alternate embodiments of capacitive sensors mounted in the tread elements.

### Detailed Description of Example Embodiments of the Invention

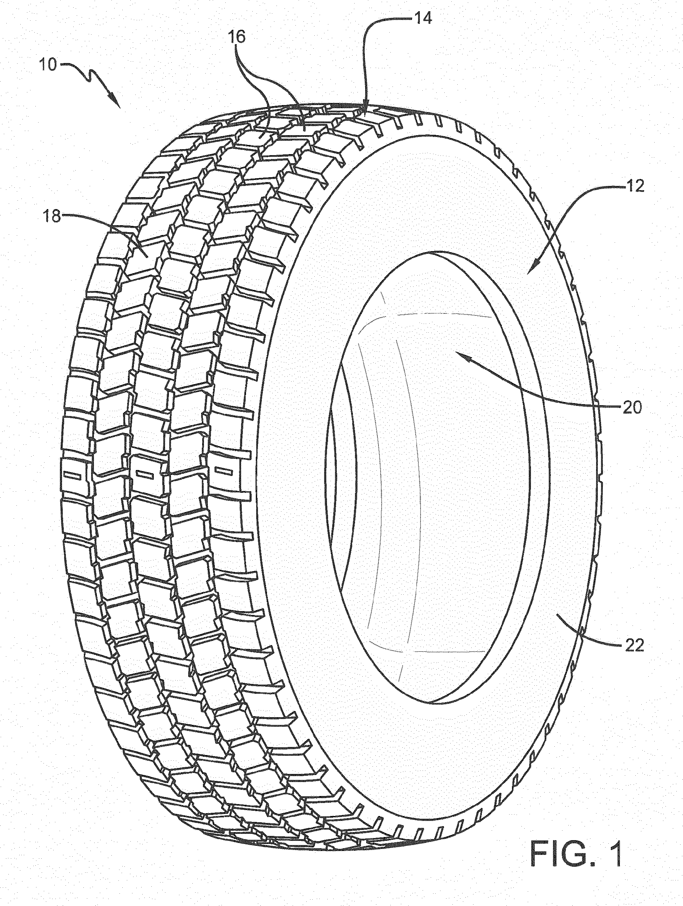

Referring to FIG. 1, an example tire 10 is shown having a sidewall 12 and a radially outward tread 14. The tread 14 as shown may further include one or more tread elements 18, such as for example, multiple rows of tread lugs 16. However, the tread elements 18 may also be tread blocks or tread ribs. However, the invention is not limited to a tread with tread elements 18, and may also be used on a smooth outer tread surface having no tread elements. The tire 10 further includes an inner liner or air impervious layer 20. Pursuant to conventional tire construction, the tire 10 is formed as a tire carcass 22 in a green tire build procedure and subsequently cured into the finished tire product.

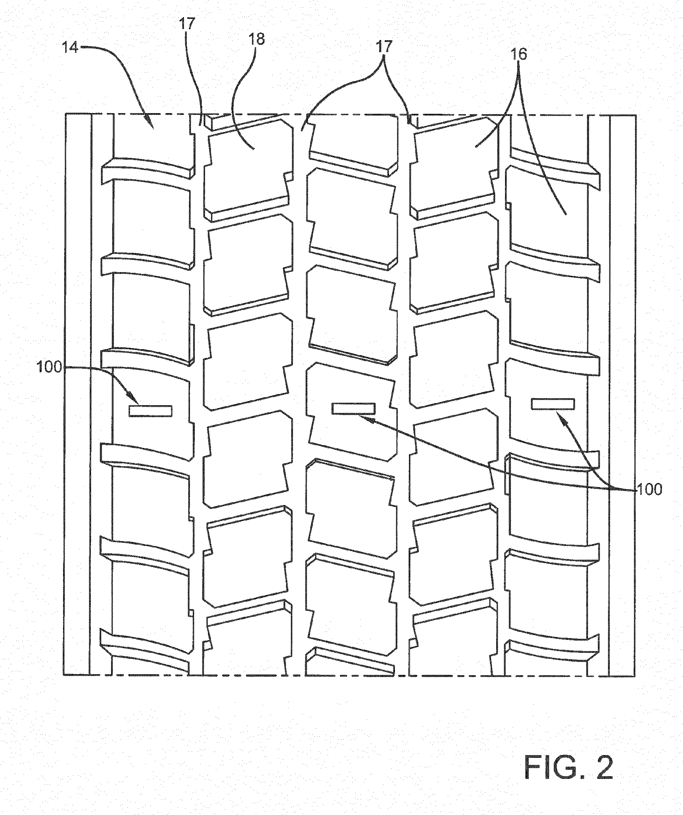

FIG. 2 illustrates an enlarged view of the tread region, illustrating the tread rows 16 formed by the spaced apart tread elements 18 that are separated by circumferential grooves 17. At least one of the tread elements 18, and preferably multiple tread elements, are equipped with a sensor 100, also referred herein as a "wear sensor" or "treadwear indicator." The purpose of the sensor is to detect the progressive wearing of the tread elements 18 or the depth of a tire tread having no tread elements. One or more of the tread wear sensors 100 are mounted in the tread in order to monitor the general tread wear of the tire. By monitoring tread wear digitally, by a wireless electrical reader, the wear status of the tire and rate of wear may be ascertained. From determining the wear status of the tire, a decision on whether and when to replace the worn tire may be made.

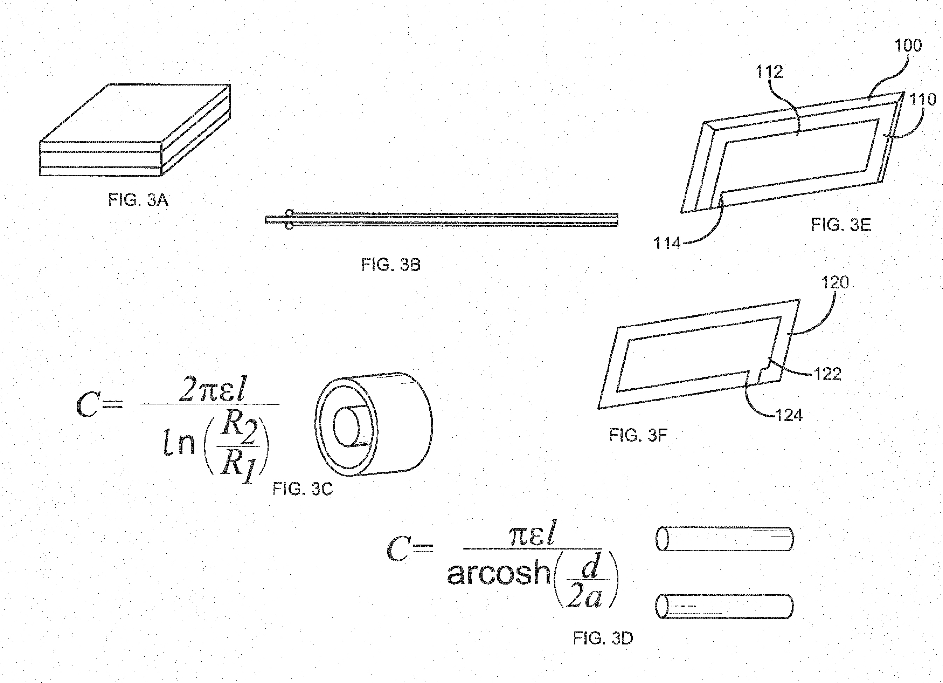

With reference to FIG. 3, the principle by which the tread wear sensors 100 operate will be understood. Each tread wear sensor 100 includes an electrical element that is a capacitor. Figure 3A illustrates a capacitor made of two opposed conductive plates that are separated by a dielectric. Thus, a relatively thin strip of rubber or polymer 100 that has a first side 110 and a second side 120 that is either painted or printed with a large block 112, 122 of electrically conductive paint or ink to form a capacitor, with printed lead lines 114, 124. One suitable ink for use in a tire is made by EMS, Inc in Delaware, Ohio and is sold under the trade name CI-2061. The ink must be electrically conductive and is flexible and capable of withstanding more than 50% strain both dynamic and static. In one example, the type of ink that would work is graphite ink.

Other examples of capacitors are shown in Fig. 3C a coaxial cable and pair of parallel wires as shown in Fig. 3D.

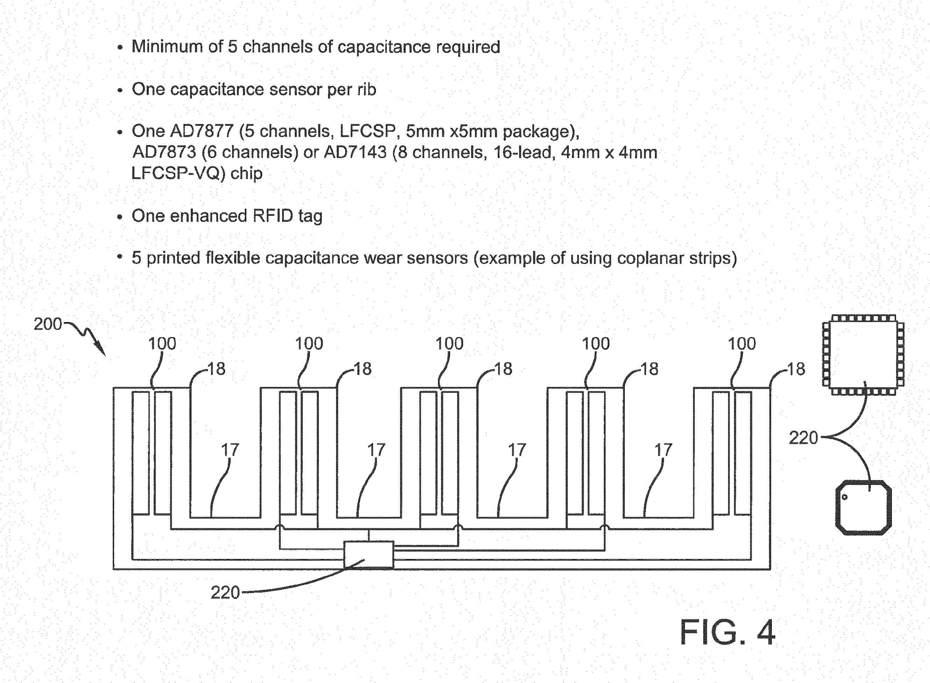

Fig. 4 illustrates a first example of a tread wear sensor system 200. The tread wear sensor includes a plurality of sensors 100 embedded in the tread elements of a tire. One or more of the tread elements have a sensor 100 that utilizes a capacitive sensor. The sensor 100 includes a rubber layer (dielectric layer) having a first conductive plate on a first side, and a second conductive plate on a second side. The first and second conductive plates with dielectric layer act as a capacitor. The capacitance signal indicates the remaining tread depth. Preferably, conductive ink is used to print desired area on each side of the rubber layer 100 as shown in Fig 3E and Fig. 3F based on the required initial capacitance level that will be determined by detection sensitivity and signal noise. The capacitor configuration is not limited to a parallel-plate capacitor. Several other capacitor configurations such as coaxial, pair of parallel wires, or to parallel coplanar strips could also be used for this purpose and are shown in Fig. 3C and Fig 3D. This type of sensor is a continuous tread wear indicator. The measured capacitance C_{T} has linear relationship with remained tread depth L as C_{T} =Co X L/Lo

The capacitance sensor is oriented in the radial direction so that as the tread wears, the capacitance level decreases. Preferably, each of the capacitance sensors are printed or painted with electrically conductive and flexible ink, and then inserted in a sipe or groove of the tire. Alternatively, the sensors could be mounted to an outer surface of the tread block or rib.

More preferably, multiple capacitance sensors electrically connected to single chip RFID tag 220 to provide rib based or location based wear indication and converter chip to provide A/D conversion. The RFID tag 220 is enhanced to receive multiple data inputs. Fig. 4 is one of one example to provide rib based wear information (5 ribs tire);

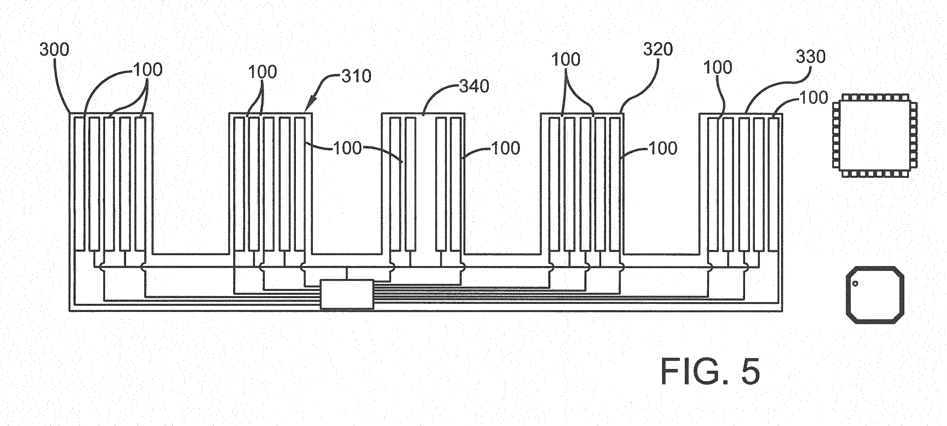

Fig. 5 is a second embodiment of a sensor system that is similar to the embodiment shown in Figure 4, except for the following differences. Each tread element includes multiple capacitive sensors 100. For example, tread elements 300, 310, 320 and 330 each have at least one capacitance sensor, preferably at least two capacitance sensors 100 and more preferably at least three capacitance sensors 100. The tread element 340 has at least one capacitance sensor, and preferably two capacitance sensors. The capacitance sensors are in electrical communication with a passive RFID tag that preferably includes an Analog/ digital converter chip.

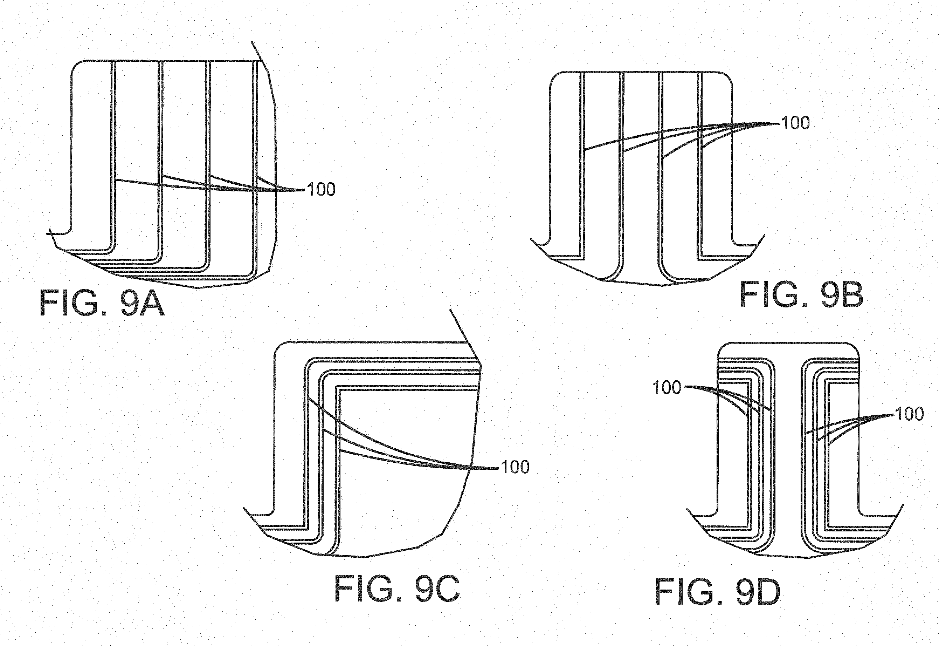

Fig. 9 illustrates additional configurations of capacitance sensors arranged in tread elements. Fig. 9A illustrates capacitance sensors for an axially outer tread element with sensors arranged for discrete tread wear detection. Fig. 9B illustrates capacitance sensors for an axially interior tread element with sensors arranged for discrete tread wear detection. Fig. 9C illustrates capacitance sensors for an axially outer tread element with sensors arranged for continuous tread wear detection. Fig. 9D illustrates capacitance sensors for an axially interior tread element with sensors arranged for continuous tread wear detection.

Furthermore, one or more of the capacitor based sensors 100 could also be used as aquaplaning detector. As the tire runs through the wet surface, the circuit will indicate near zero capacitance (shorted). This may provide extra safety information for vehicle operation.

As examples from the above described embodiments, the enhanced passive tag will integrate with at least one (may include multi-channels) A/D converter that provides power from RFID tag to sensor and converts measured signal (analog) into digital form and store it to RFID tag's memory that then transmitted to RFID reader upon requested. Multiple A/D converters may be used if different types of sensors (for example, voltage and capacitance based sensor) are integrated with same RFID tag.

### Reader Location and Power Options

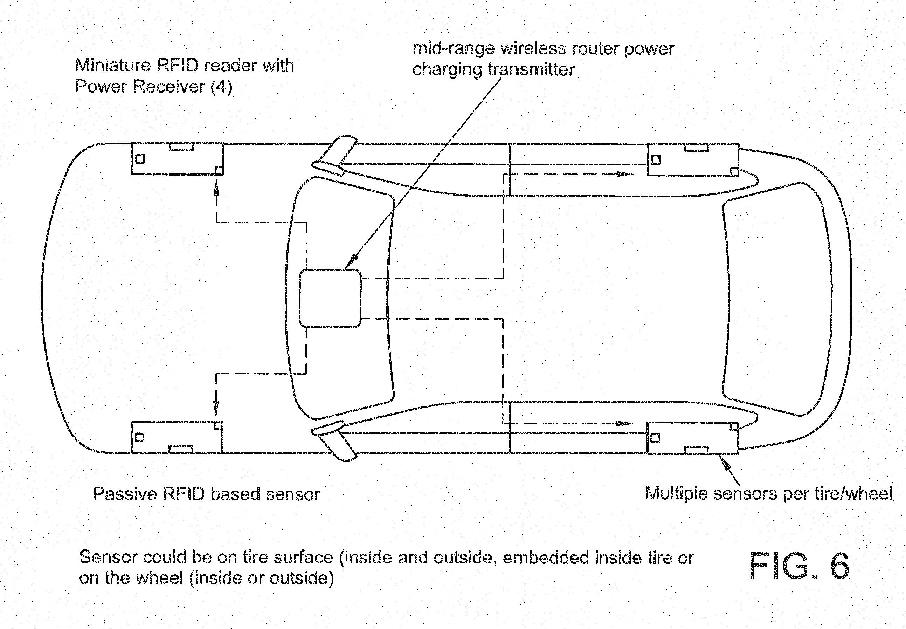

Each reader may be a small electronic receiver, electronic transceiver that could communicate with a passive RFID (RadioFrequency IDentification) tag/sensor to obtained required information; In another embodiment as shown in Fig. 6, there are four miniature readers located at each vehicle axle, wherein the readers are mounted to a protected wheel hub. Each miniature reader is preferably included a mid- or long-range wireless power receiver so that it would be powered wirelessly by a central vehicle mid- or long-range wireless charging transmitter. The wireless charging transmitter is powered by the vehicle battery and wirelessly charges each miniature reader via the power receiver. A rechargeable battery or supercapacitor base power storage device is preferably included with reader. A low power RF reader could be implemented for this application as the reader is closed to sensors. A programable RFID reader is preferably for this application that could handle multiple tag/sensors in a tire without any hardware modification. Multiple wireless communication protocols are preferably included within the reader such as Bluetooth, Wi-Fi and/or LTE.

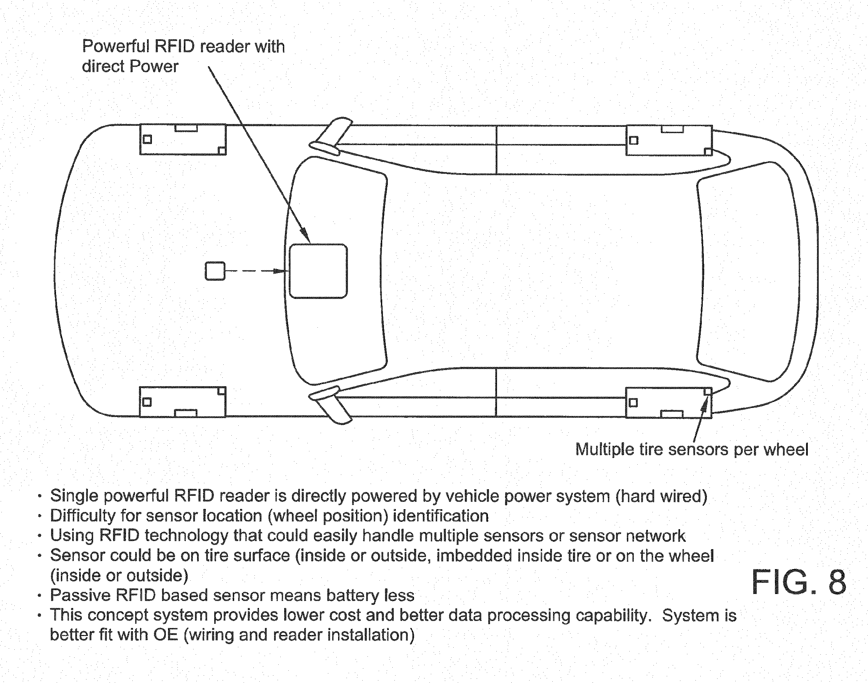

An alternative embodiment is shown in Fig. 8 wherein there is a single RFID reader that is mounted in the vehicle and is powerful enough to read the signals from the sensors. the reader receives power from the vehicle battery.

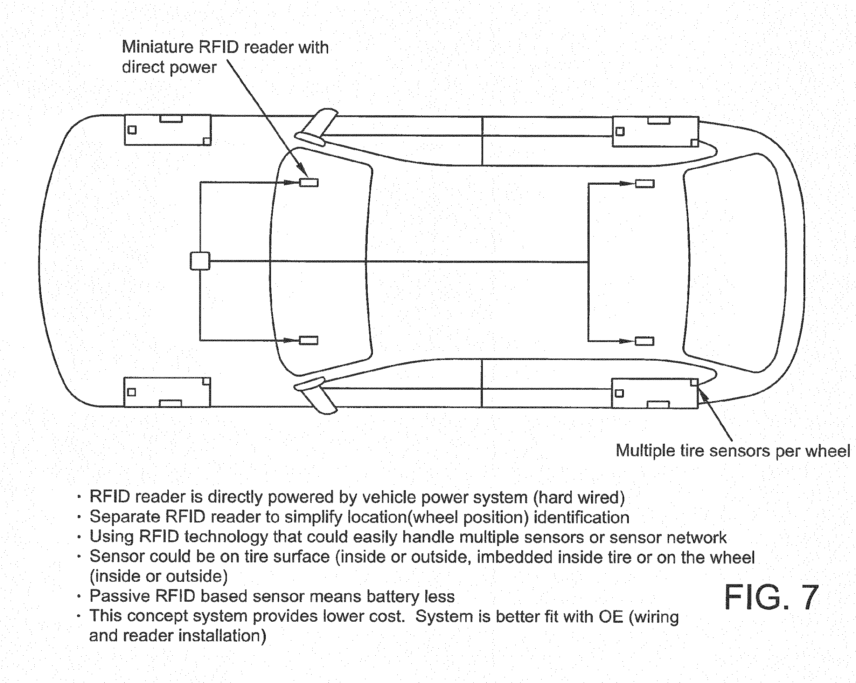

In an alternate embodiment, the reader is at a remote location such as a drive over reader device. Alternatively, the reader may be powered by a small battery or energy harvestor embedded in the patch or be hardwired to the vehicle battery as shown in Fig. 7.

The tread depth measurement would only need to be taken at low frequency and transmitted infrequently e.g., once a month due to the slow wear rate of tires, so power requirements would be low. The tread depth readings could be stored on a server for commercial tire management and data analysis. For consumer tires, the server could send emails to consumer warning of need to replace a worn-out tire. In addition, the non-skid of all four tires on a passenger car could be monitored as well as say both shoulders of each to give info on alignment maintenance. This convenience would be even more valuable on commercial fleet vehicles where the non-skid of all, for instance 18 wheels could be monitored automatically.

## Claims

1. A vehicle tire tread wear sensor system, the system (200) comprising a tire (10) having a tread (14) and a tread wear sensor (100) mounted in the tread (14), the tread wear sensor (100) comprising:
(i) a capacitor comprising electrically conductive ink; and/or
(ii) at least one electrical element affixed to a rubber layer, wherein the rubber layer is mounted in the tread (14), wherein the electrical element is made of a capacitor for emitting an electrical signal, and a passive printed circuit mounted in electrical communication with the electrical element and capable of sensing an electrical signal emitted from the electrical element, wherein the printed circuit is printed using a stretchable ink.

2. The system of claim 1 wherein the tread wear sensor (100) is positioned in a groove (17) or in a sipe of the tread (14).

3. The system of claim 1 or 2 wherein the tread wear sensor (100) comprises a printed circuit or wherein the capacitor is part of a printed circuit, and wherein the tread wear sensor (100) or the printed circuit is in electrical or wireless communication with a RFID tag (220).

4. The system of at least one of the previous claims wherein the tread wear sensor (100) comprises a preferably thin layer having a first and second surface (110, 120), the layer being part of the capacitor such as its dielectric, and/or wherein a respective element (112, 122) of the capacitor such as a printed layer of said electrically conductive ink is formed on at least one or on each of the first and second surface (110, 120).

5. The system of claim 4 wherein the layer is a rubber layer.

6. The system of at least one of the previous claims wherein the capacitor is oriented in the radial direction or extends along the radial direction of the tread (14); and/or wherein the sensor (100) is mounted to the side of a tread element.

7. The system of at least one of the previous claims wherein the capacitor is printed using a stretchable electrically conductive ink.

8. The system of at least one of the previous claims wherein:
(i) the RFID tag (220) is printed on the rubber layer and is in electrical communication with the printed circuit;
(ii) the RFID tag (220) is a chip mounted on the layer;
(iii) the RFID tag (220) is a chip mounted in the tread (14) in a groove (17) or sipe; or
(iv) the RFID tag (220) is a chip mounted in the tread (14) in a pocket of a groove (17) or sipe.

9. The system of at least one of the previous claims wherein the tread wear sensor (100) is mounted in the tread (14) in a groove or sipe post cure of the tire (10).

10. The system of at least one of the previous claims further comprising a reader, preferably a UHF-RFID reader or a passive UHF-RFID reader.

11. The system of at least one of the previous claims further comprising data processing means for determining a tread wear status of the tread (14) based on the absence of an electrical signal from the electrical element or the capacitor.

12. The system of at least one of the previous claims wherein the RFID tag (220) is passive and/or wherein the RFID tag (220) comprises a A/D convertor.

13. The system of at least one of the previous claims wherein the electrical element or the capacitor is sacrificial.

14. The system of at least one of the previous claims wherein there is an array of tread wear sensor sensors (100) mounted in the tread (14).

15. The system of at least one of the previous claims wherein a passive voltage-measuring circuit is mounted in the tread (14) in a groove (17) or sipe.

## Patentansprüche

1. Fahrzeugreifenlaufflächenverschleißsensorsystem, wobei das System (200) einen Reifen (10), der eine Lauffläche (14) und einen Laufflächenverschleißsensor (100) aufweist, der in der Lauffläche (14) gelagert ist, umfasst, wobei der Laufflächenverschleißsensor (100) Folgendes umfasst:
(i) einen Kondensator, der elektrisch leitfähige Tinte umfasst; und/oder
(ii) wenigstens ein elektrisches Element, das an einer Kautschukschicht befestigt ist, wobei die Kautschukschicht in der Lauffläche (14) gelagert ist, wobei das elektrische Element aus einem Kondensator zum Emittieren eines elektrischen Signals und einem passiven gedruckten Stromkreis, der in elektrischer Verbindung mit dem elektrischen Element gelagert ist und in der Lage ist, ein von dem elektrischen Element emittiertes elektrisches Signal abzugreifen, besteht, wobei der gedruckte Stromkreis unter Verwendung einer dehnbaren Tinte gedruckt wird.

2. System nach Anspruch 1, wobei der Laufflächenverschleißsensor (100) in einer Nut (17) oder in einer Lamelle der Lauffläche (14) angeordnet ist.

3. System nach Anspruch 1 oder 2, wobei der Laufflächenverschleißsensor (100) einen gedruckten Stromkreis umfasst oder wobei der Kondensator Teil eines gedruckten Stromkreises ist und wobei der Laufflächenverschleißsensor (100) oder der gedruckte Stromkreis in elektrischer oder drahtloser Verbindung mit einem RFID-Tag (220) steht.

4. System nach wenigstens einem der vorhergehenden Ansprüche, wobei der Laufflächenverschleißsensor (100) eine bevorzugt dünne Schicht, die eine erste und eine zweite Oberfläche (110, 120) aufweist, umfasst, wobei die Schicht Teil des Kondensators ist, wie etwa sein Dielektrikum, und/oder wobei ein entsprechendes Element (112, 122) des Kondensators, wie etwa eine gedruckte Schicht der elektrisch leitfähigen Tinte, auf wenigstens einer oder auf jeder der ersten und der zweiten Oberfläche (110, 120) ausgebildet ist.

5. System nach Anspruch 4, wobei die Schicht eine Kautschukschicht ist.

6. System nach wenigstens einem der vorhergehenden Ansprüche, wobei der Kondensator in der radialen Richtung orientiert ist oder sich entlang der radialen Richtung der Lauffläche (14) erstreckt; und/oder wobei der Sensor (100) an der Seite eines Laufflächenelements gelagert ist.

7. System nach wenigstens einem der vorhergehenden Ansprüche, wobei der Kondensator unter Verwendung einer dehnbaren elektrisch leitfähigen Tinte gedruckt wird.

8. System nach wenigstens einem der vorhergehenden Ansprüche, wobei:
(i) das RFID-Tag (220) auf die Kautschukschicht gedruckt ist und in elektrischer Verbindung mit dem gedruckten Stromkreis steht;
(ii) das RFID-Tag (220) ein Chip ist, der auf der Schicht gelagert ist;
(iii) das RFID-Tag (220) ein Chip ist, der in der Lauffläche (14) in einer Nut (17) oder einer Lamelle gelagert ist; oder
(iv) das RFID-Tag (220) ein Chip ist, der in der Lauffläche (14) in einer Tasche einer Nut (17) oder einer Lamelle gelagert ist.

9. System nach wenigstens einem der vorhergehenden Ansprüche, wobei der Laufflächenverschleißsensor (100) in der Lauffläche (14) in einer Nut oder einer Lamelle nach Aushärten des Reifens (10) gelagert ist.

10. System nach wenigstens einem der vorhergehenden Ansprüche, das ferner ein Lesegerät, bevorzugt ein UHF-RFID-Lesegerät oder ein passives UHF-RFID-Lesegerät, umfasst.

11. System nach wenigstens einem der vorhergehenden Ansprüche, das ferner Datenverarbeitungsmittel zum Bestimmen eines Laufflächenverschleißstatus der Lauffläche (14) basierend auf dem Fehlen eines elektrischen Signals von dem elektrischen Element oder dem Kondensator umfasst.

12. System nach wenigstens einem der vorhergehenden Ansprüche, wobei das RFID-Tag (220) passiv ist und/oder wobei das RFID-Tag (220) einen A/D-Wandler umfasst.

13. System nach wenigstens einem der vorhergehenden Ansprüche, wobei das elektrische Element oder der Kondensator geopfert werden kann.

14. System nach wenigstens einem der vorhergehenden Ansprüche, wobei eine Anordnung von Laufflächenverschleißsensorsensoren (100) in der Lauffläche (14) gelagert ist.

15. System nach wenigstens einem der vorhergehenden Ansprüche, wobei ein passiver Spannungsmessstromkreis in der Lauffläche (14) in einer Nut (17) oder einer Lamelle gelagert ist.

## Revendications

1. Système de capteur de l'usure de la bande de roulement d'un bandage pneumatique pour véhicule, le système (200) comprenant un bandage pneumatique (10) qui possède une bande de roulement (14) et un capteur (100) de l'usure de la bande de roulement qui est monté dans la bande de roulement (14), le capteur (100) de l'usure de la bande de roulement comprenant :
(i) un condensateur qui comprend une encre conductrice par voie électrique ; et/ou
(ii) au moins un élément électrique qui est fixé à une couche de caoutchouc ; dans lequel la couche de caoutchouc est montée dans la bande de roulement (14) ; dans lequel l'élément électrique est constitué par un condensateur qui est destiné à émettre un signal électrique ; et un circuit imprimé passif qui est monté en communication électrique avec l'élément électrique et qui est capable de détecter un signal électrique qui est émis à partir de l'élément électrique; dans lequel le circuit imprimé est imprimé en utilisant une encre apte à s'étendre.

2. Système selon la revendication 1, dans lequel le capteur (100) de l'usure de la bande de roulement est disposé dans une rainure (17) ou dans une lamelle de la bande de roulement (14).

3. Système selon la revendication 1 ou 2, dans lequel le capteur (100) de l'usure de la bande de roulement comprend un circuit imprimé; ou dans lequel le condensateur fait partie d'un circuit imprimé ; et dans lequel le capteur (100) de l'usure de la bande de roulement ou le circuit imprimé est mis en circuit communication par voie électrique ou sans fil avec une étiquette RFID (220).

4. Système selon au moins une des revendications précédentes, dans lequel le capteur (100) de l'usure de la bande de roulement comprend une couche de préférence mince qui possède une première et une deuxième surface (110, 120), la couche faisant partie du condensateur par exemple sous la forme de son diélectrique; et/ou dans lequel un élément respectif (112, 122) du condensateur, tel qu'une couche imprimée de ladite encre conductrice par voie électrique, est formé sur au moins une surface choisie parmi la première et la deuxième surface (110, 120) ou sur chacune desdites surfaces.

5. Système selon la revendication 4, dans lequel la couche représente une couche en caoutchouc.

6. Système selon au moins une des revendications précédentes, dans lequel le condensateur est orienté dans la direction radiale ou s'étend le long de la direction radiale de la bande de roulement (14) ; et/ou dans lequel le capteur (100) est monté sur le côté d'un élément faisant office de bande de roulement.

7. Système selon au moins une des revendications précédentes, dans lequel le condensateur est imprimé en utilisant une encre conductrice qui est apte à s'étendre par voie électrique.

8. Système selon au moins une des revendications précédentes, dans lequel :
(i) l'étiquette RFID (220) est imprimée sur la couche en caoutchouc et est mise en communication électrique avec le circuit imprimé ;
(ii) l'étiquette RFID (220) représente une puce qui est montée sur la couche ;
(iii) l'étiquette RFID (220) représente une puce qui est montée dans la bande de roulement (14) dans une rainure (17) ou dans une lamelle ;
(iv) l'étiquette RFID (220) représente une puce qui est montée dans la bande de roulement (14) dans une poche d'une rainure (17) ou d'une lamelle.

9. Système selon au moins une des revendications précédentes, dans lequel le capteur (100) de l'usure de la bande de roulement est monté dans la bande de roulement (14) dans une rainure ou dans une lamelle à la suite de la vulcanisation du bandage pneumatique (10).

10. Système selon au moins une des revendications précédentes qui comprend en outre un lecteur, de préférence un lecteur de type UHF-RFID ou un lecteur passif de type UHF-RFID.

11. Système selon au moins une des revendications précédentes qui comprend en outre un moyen de traitement de données qui est destiné à déterminer un état d'usure de bande de roulement de la bande de roulement (14) en se basant sur l'absence d'un signal électrique émis par l'élément électrique ou par le condensateur.

12. Système selon au moins une des revendications précédentes, dans lequel l'étiquette RFID (220) est passive et/ou dans lequel l'étiquette RFID (220) comprend un convertisseur A/N.

13. Système selon au moins une des revendications précédentes, dans lequel l'élément électrique ou le condensateur est sacrificiel.

14. Système selon au moins une des revendications précédentes, dans lequel on prévoit une série de capteurs de l'usure de la bande de roulement (100) qui sont montés dans la bande de roulement (14).

15. Système selon au moins une des revendications précédentes, dans lequel un circuit passif de mesure de la tension est monté dans la bande de roulement (14) dans une rainure (17) ou dans une lamelle.
